# FASCICULE DE BREVET EUROPEEN

(11) **EP 2 775 280 B1**
(45) Date de publication et mention de la délivrance du brevet: **04.04.2018**
(21) Numéro de dépôt: 14152766.3
(22) Date de dépôt: 28.01.2014
(51) Int. Cl.: G01L 19/06

(54) **Dispositif de contrôle de surpression pour un transmetteur de pression**
Überdrucksicherung für ein Drucksender
Overpressure protection device employed in a pressure transmitter

(30) Priorité: 08.03.2013 FR 1352101
(43) Date de publication de la demande: 10.09.2014
(73) Titulaire: Schneider Electric Industries SAS, 92500 Rueil-Malmaison (FR)
(72) Inventeur: Gomez, Ernesto, 16000 Angoulême (FR)
(74) Mandataire: Dufresne, Thierry

(56) Documents cités:
- WO-A1-01/69194
- WO-A2-2012/089626

## Description

### Domaine technique de l'invention

La présente invention se rapporte à un dispositif de contrôle de surpression employé dans un transmetteur de pression. Ce dispositif sera notamment employé dans le domaine de l'industrie.

### Etat de la technique

Un transmetteur de pression est destiné à contrôler et mesurer la pression d'un fluide circulant dans un système hydraulique ou pneumatique et à délivrer un signal électrique de sortie représentatif de la pression mesurée. Le signal électrique de sortie est par exemple un signal analogique, généralement compris entre 4 et 20 mA.

Les transmetteurs de pression doivent être protégés contre toute surpression intempestive susceptible de les endommager.

Différentes solutions existent dans l'état de la technique pour contrôler la surpression et éviter tout endommagement du transmetteur. Les solutions classiques consistent à fermer automatiquement le conduit d'entrée du fluide en cas de surpression. Une autre solution consiste à employer un disque qui est calibré pour se rompre en cas de surpression. Une autre solution consiste à visser dans le conduit d'entrée un organe comportant une partie fixe et une partie séparable, la partie séparable se détachant de la partie fixe en cas de surpression pour venir obturer la sortie du conduit d'entrée afin d'empêcher le fluide d'atteindre l'organe capteur.

Ces solutions connues ne sont pas satisfaisantes. Certaines d'entre elles comportent trop de pièces et sont difficiles à assembler, d'autres comportent des pièces difficiles à fabriquer. De plus, dès lors que l'on cherche à épargner le transmetteur lors des surpressions, les solutions connues sont endommagées voire détruites et nécessitent leur remplacement.

Des dispositifs de contrôle de surpression sont également décrits dans les demandes de brevet WO2012/089626A2 et WO0/69194A1.

Le but de l'invention est de proposer un dispositif de contrôle de surpression destiné à être employé dans un transmetteur de pression, ledit dispositif étant facile à fabriquer, simple à assembler et efficace pour éviter tout endommagement du transmetteur et dudit dispositif de contrôle en cas de surpression du fluide. Le dispositif proposé est une solution universelle, adaptée à tous les types d'entrée de fluides et à toutes les gammes de pressions, notamment dans l'industrie.

### Exposé de l'invention

Ce but est atteint par un dispositif de contrôle de surpression selon revendication 1. Selon une particularité, le dispositif comporte un filetage externe apte à coopérer avec un taraudage réalisé dans le conduit d'entrée du transmetteur de pression.

L'invention concerne également un transmetteur de pression comprenant un corps, un conduit d'entrée formé sur le corps et destiné à recevoir un fluide, un organe capteur sur lequel débouche le conduit d'entrée, ledit organe capteur étant destiné à mesurer une pression et à délivrer un signal électrique de sortie représentatif de la pression mesurée, et un dispositif de contrôle de surpression logé dans ledit conduit d'entrée, ledit dispositif de contrôle de surpression étant conforme à celui défini ci-dessus.

Selon une particularité, le transmetteur de pression comporte un taraudage réalisé dans le conduit d'entrée et le dispositif de contrôle de surpression comporte un filetage externe pour se visser sur ledit taraudage.

### Brève description des figures

D'autres caractéristiques et avantages vont apparaître dans la description détaillée qui suit faite en regard des dessins annexés listés ci-dessous :
- la figure 1 représente le corps d'un transmetteur de pression, dans lequel est inséré un dispositif de contrôle de surpression conforme à l'invention,
- la figure 2 représente, vu en perspective, le dispositif de contrôle de surpression de l'invention,
- la figure 3 représente, vue en perspective, une demi-coque du dispositif de contrôle de surpression de l'invention,
- les figures 4A et 4B représentent, vu en coupe longitudinale axiale, le dispositif de contrôle de surpression de l'invention selon deux variantes possibles de son agencement interne.

### Description détaillée d'au moins un mode de réalisation

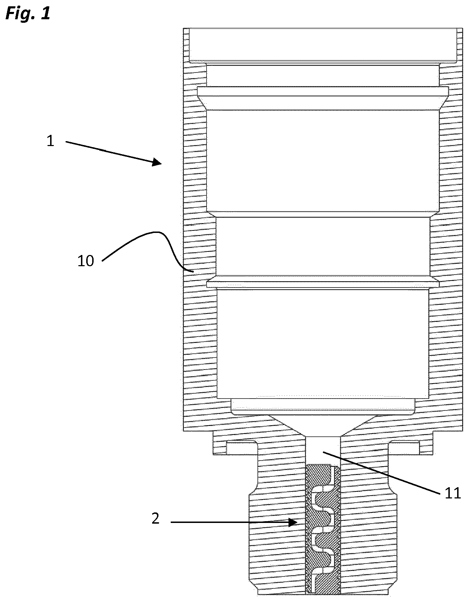

De manière connue, un transmetteur de pression 1 comporte un corps 10 (figure 1), un conduit d'entrée 11 formé sur le corps, ledit conduit d'entrée 11 étant destiné à recevoir un fluide dont on souhaite mesurer la pression. Le corps 10 du transmetteur de pression loge un organe capteur (non représenté) destiné à mesurer la pression dudit fluide. Cet organe capteur peut employer différentes techniques connues. L'une de ces techniques emploie par exemple une membrane détectrice dont le déplacement est proportionnel à la pression différentielle. La position de la membrane détectrice est par exemple détectée par des plaques de condensateur situées de part et d'autre de ladite membrane. La différence de capacité entre la membrane détectrice et les plaques de condensateur est convertie électroniquement en un signal électrique de sortie, par exemple compris entre 4 et 20mA, ledit signal étant représentatif de la pression différentielle mesurée. D'autres techniques de mesure peuvent bien entendu être employées. L'architecture de l'organe capteur n'étant pas l'objet de la présente invention, ces techniques ne sont pas décrites dans la présente demande de brevet.

L'invention consiste à proposer un dispositif 2 de contrôle de surpression permettant d'éviter d'endommager l'organe capteur, donc le transmetteur de pression, en cas de surpression.

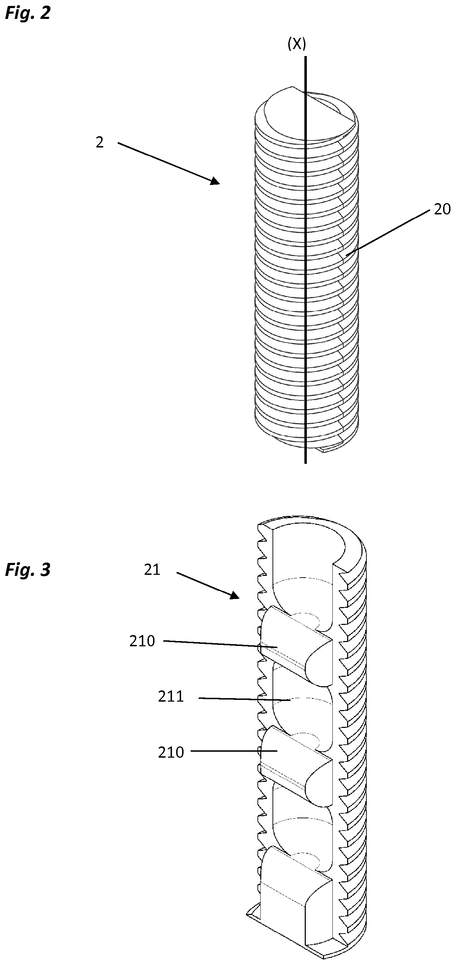

Ce dispositif de contrôle de surpression est destiné à se positionner axialement dans le conduit d'entrée 11 de fluide du transmetteur de pression 1 (figure 1). Il présente une forme cylindrique, le cylindre présentant un axe (X) de révolution réalisé selon une direction longitudinale, suivant laquelle s'écoule le fluide. Préférentiellement, le cylindre comporte un filetage 20 externe (figure 2) de manière à pouvoir se visser sur un taraudage réalisé sur la surface interne du conduit d'entrée 11. D'autres moyens de fixation pourraient bien entendu être envisagés.

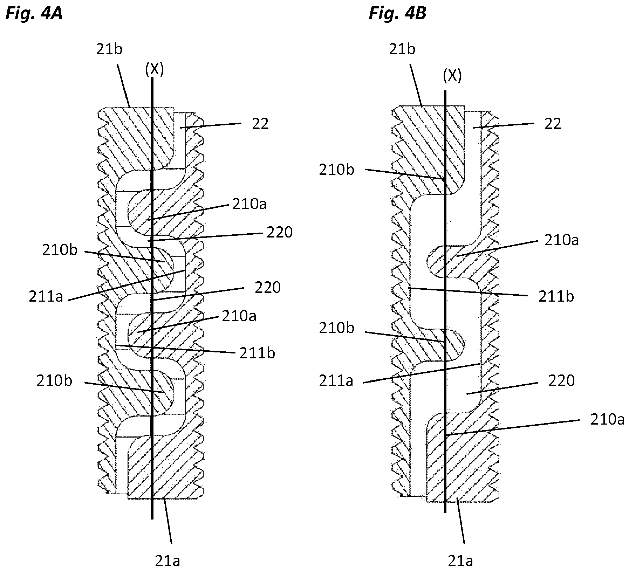

Le dispositif de contrôle de surpression est réalisé en au moins deux parties assemblées l'une sur l'autre (figures 4A et 4B), par exemple suivant un plan longitudinal axial. Les deux parties 21a, 21b (21 sur la figure 3) sont préférentiellement identiques et sont assemblées l'une sur l'autre, tête-bêche. Chaque partie a par exemple la forme d'un demi-cylindre. Préférentiellement, l'assemblage d'une partie sur l'autre partie est réalisé lors du vissage du dispositif de contrôle sur le taraudage du transmetteur. L'assemblage entre les deux parties pourrait bien entendu être réalisé autrement, par exemple en employant de la colle ou des moyens de fixation mécaniques.

Selon l'invention, le dispositif 2 de contrôle de surpression forme un canal 22 interne d'écoulement du fluide, ledit canal 22 comprenant une ou plusieurs chicanes 220 successives. Les chicanes 220 sont réalisées par l'agencement interne de chaque partie 21a, 21b et par l'assemblage des parties 21a, 21b entre elles. On entend par chicane, une portion du canal interne permettant au fluide de circuler d'un conduit formé suivant un premier plan longitudinal à un conduit formé suivant un deuxième plan longitudinal, parallèle au premier plan longitudinal et distinct de celui-ci.

En référence à la figure 3, chaque partie 21 présente au moins deux proéminences 210 réalisées en saillie par rapport au plan axial d'assemblage avec l'autre partie. Entre ses deux proéminences, chaque partie 21 présente un créneau 211. En référence aux figures 4A et 4B, en assemblant les deux parties 21a, 21b tête bêche, une proéminence 210a de la première partie 21a vient se loger dans le créneau 211b de la deuxième partie 21b et la proéminence 210b de la deuxième partie 21b vient se loger dans un créneau 211a de la première partie, formant ainsi deux chicanes successives. Pour former chaque chicane 220, les dimensions dans la direction axiale et dans la direction radiale de chaque proéminence 210a, 210b d'une partie sont inférieures aux dimensions du créneau correspondant de l'autre partie.

En référence aux figures 4A et 4B, selon les dimensions respectives de chaque proéminence et des créneaux, il est possible de faire varier les dimensions de chaque chicane et d'adapter le dispositif employé au type de fluide, notamment à sa viscosité.

Selon l'invention, le fluide arrivant dans le transmetteur de pression 1 est ainsi ralenti par les chicanes successives réalisées dans le dispositif de contrôle de surpression. La solution de l'invention s'avère particulièrement simple à mettre en oeuvre, les deux parties étant identiques et faciles à assembler l'une sur l'autre. Par ailleurs, il est possible de prévoir des dispositifs présentant des agencements internes différents en vue de s'adapter au type de fluide dont la pression est mesurée. Contrairement à certaines solutions de l'état de la technique, le dispositif de l'invention n'est pas détruit en cas de surpression et ne nécessite donc pas d'être remplacé après avoir subi une surpression.

## Revendications

1. Dispositif de contrôle de surpression destiné à être employé dans un transmetteur de pression (1), ledit transmetteur de pression comprenant un corps (10), un conduit d'entrée (11) formé sur le corps et destiné à recevoir un fluide, un organe capteur sur lequel débouche le conduit d'entrée, ledit organe capteur étant destiné à mesurer une pression et à délivrer un signal électrique de sortie représentatif de la pression mesurée, ledit dispositif de contrôle de surpression étant destiné à être positionné à l'intérieur du conduit d'entrée (11) du transmetteur de pression (1) et étant **caractérisé en ce qu'**il comporte deux parties (21a, 21b) identiques présentant chacune la forme d'un demi-cylindre comprenant au moins une proéminence (210) interne et un créneau (211), les deux parties étant assemblées entre elles tête bêche de sorte qu'une proéminence d'une partie s'engage dans un créneau de l'autre partie de manière à former un canal (22) interne d'écoulement du fluide comprenant une ou plusieurs chicanes (220) successives.

2. Dispositif de contrôle de surpression selon la revendication 1, **caractérisé en ce qu'**il comporte un filetage (20) externe apte à coopérer avec un taraudage réalisé dans le conduit d'entrée (11) du transmetteur de pression.

3. Transmetteur de pression (1) comprenant un corps, un conduit d'entrée formé sur le corps et destiné à recevoir un fluide, un organe capteur sur lequel débouche le conduit d'entrée, ledit organe capteur étant destiné à mesurer une pression et à délivrer un signal électrique de sortie représentatif de la pression mesurée, et un dispositif de contrôle de surpression (2) logé dans ledit conduit d'entrée, **caractérisé en ce que** ledit dispositif de contrôle de surpression (2) est tel que défini dans l'une des revendications 1 à 2.

4. Transmetteur de pression selon la revendication 3, **caractérisé en ce qu'**il comporte un taraudage réalisé dans le conduit d'entrée (11) et **en ce que** le dispositif de contrôle de surpression comporte un filetage externe (20) pour se visser sur ledit taraudage.

## Patentansprüche

1. Überdrucksicherung zum Einsatz in einem Drucksender (1), der Drucksender umfassend einen Körper (10), eine Eingangsleitung (11), die auf dem Körper ausgebildet ist und dazu bestimmt ist, ein Fluid aufzunehmen, ein Sensorelement, auf dem die Eingangsleitung mündet, wobei das Sensorelement dazu bestimmt ist, einen Druck zu messen und ein elektrisches Ausgangssignal zu liefern, das den gemessenen Druck darstellt, wobei die Überdrucksicherung dazu bestimmt ist, im Inneren der Eingangsleitung (11) des Drucksenders (1) positioniert zu sein und **dadurch gekennzeichnet ist, dass** sie zwei identische Bereiche (21a, 21b) umfasst, die jeweils die Form eines Halbzylinders aufweisen, umfassend mindestens einen inneren Vorsprung (210) und eine Einbuchtung (211), wobei die zwei Bereiche gegenüberliegend zusammengesetzt sind, so dass ein Vorsprung eines Bereichs in eine Einbuchtung des anderen Bereichs eingreift, um einen inneren Strömungskanal (22) des Fluids zu bilden, der eine oder mehrere aufeinanderfolgende Schikanen (220) aufweist.

2. Überdrucksicherung nach Anspruch 1, **dadurch gekennzeichnet, dass** sie ein Außengewinde (20) umfasst, das in der Lage ist, mit einem Innengewinde zusammenzuwirken, das in der Eingangsleitung (11) des Drucksenders ausgebildet ist.

3. Drucksender (1), umfassend einen Körper, eine Eingangsleitung, die auf dem Körper ausgebildet ist und dazu bestimmt ist, ein Fluid aufzunehmen, ein Sensorelement, auf dem die Eingangsleitung mündet, wobei das Sensorelement dazu bestimmt ist, einen Druck zu messen und ein elektrisches Ausgangssignal zu liefern, das den gemessenen Druck darstellt, und eine Überdrucksicherung (2), die in der Eingangsleitung aufgenommen ist, **dadurch gekennzeichnet, dass** die Überdrucksicherung (2) derart beschaffen ist wie in einem der Ansprüche 1 bis 2 definiert.

4. Drucksender nach Anspruch 3, **dadurch gekennzeichnet, dass** er ein Innengewinde aufweist, das in der Eingangsleitung (11) ausgebildet ist, und dass die Überdrucksicherung ein Außengewinde (20) aufweist, um in das Innengewinde geschraubt zu werden.

## Claims

1. Burst pressure monitoring device intended to be employed in a pressure transmitter (1), said pressure transmitter comprising a body (10), an inlet duct (11) formed on the body and intended to receive a fluid, a sensor member on which the inlet duct emerges, said sensor member being intended to measure a pressure and to deliver an output electrical signal representative of the measured pressure, said burst pressure monitoring device being intended to be positioned inside the inlet duct (11) of the pressure transmitter (1) and being **characterized in that** it comprises two identical parts (21a, 21b) each having the form of a half-cylinder comprising at least one internal protuberance (210) and one notch (211), the two parts being assembled together head-to-tail in such a way that a protuberance of one part is fitted into a notch of the other part so as to form an internal fluid flow channel (22) comprising one or more successive chicanes (220).

2. Burst pressure monitoring device according to Claim 1, **characterized in that** it comprises an external thread (20) suitable for cooperating with an internal thread produced in the inlet duct (11) of the pressure transmitter.

3. Pressure transmitter (1) comprising a body, an inlet duct formed on the body and intended to receive a fluid, a sensor member on which the inlet duct emerges, said sensor member being intended to measure a pressure and to deliver an output electrical signal representative of the measured pressure, and a burst pressure monitoring device (2) housed in said inlet duct, **characterized in that** said burst pressure monitoring device (2) is as defined in one of Claims 1 to 2.

4. Pressure transmitter according to Claim 3, **characterized in that** it comprises an internal thread produced in the inlet duct (11) and **in that** the burst pressure monitoring device includes an external thread (20) to be screwed into said internal thread.
